# EUROPEAN PATENT SPECIFICATION

(11) **EP 3 270 286 B1**
(45) Date of publication and mention of the grant of the patent: **06.03.2019**
(21) Application number: 16179220.5
(22) Date of filing: 13.07.2016
(51) Int. Cl.: G06F 9/455, G06F 8/52, B60R 16/023, G06F 1/12, H04L 29/08

(54) **VEHICLE CONTROL LOGIC CONSIDERING TIMESTAMPS**
FAHRZEUGSTEUERLOGIK UNTER BERÜCKSICHTIGUNG VON ZEITMARKEN
LOGIQUE DE COMMANDE DE VÉHICULE TENANT COMPTE DES ESTAMPILLES TEMPORELLES

(43) Date of publication of application: 17.01.2018
(73) Proprietor: Bayerische Motoren Werke Aktiengesellschaft, 80809 München (DE)
(72) Inventor: Balagtas-Fernandez, Dr. Florence, 81543 München (DE); Grimm, Stev, 81673 München (DE); Marcial-Simon, Enrique, 97209 Veitshöchheim (DE)

(56) References cited:
- WO-A1-2006/103395
- P. Levis ET AL: "TinyOS: An Operating System for Sensor Networks" In: "Ambient Intelligence", 1 January 2005 (2005-01-01), Springer-Verlag, Berlin/Heidelberg, XP055218261, ISBN: 978-3-54-023867-6 pages 115-148, DOI: 10.1007/3-540-27139-2_7, * abstract * * page 115, paragraph 1. - page 118, paragraph 2.2 * * page 122, line 8 - page 124, last line *

## Description

The present invention is directed towards a method for reliably operating a vehicle control logic as well as a respectively arranged control device arrangement. Furthermore, a computer program comprising instructions for implementing the suggested method when executed on a computer is suggested. The present invention allows a control system to be operated securely and is therefore suitable for implementation of robust systems.

The technical field of the present invention is generally the usage of so called Mashup networks in vehicles and respective sensor arrangements. According to the ongoing development of electronic control technologies and sensor control, a variety of advanced electronic control technologies are applied so that the vehicle has gradually become advanced and high-tech. To this end, in order to provide more improved stability, efficiency and comfort of traveling to a driver, the structure of the vehicle, such as a car, including sensor control has gradually become more complicated and intertwined.

P. Levis ET AL: "TinyOS: An Operating System for Sensor Networks" In: "Ambient Intelligence", 1 January 2005 (2005-01-01), Springer-Verlag, Berlin/Heidelberg, XP055218261, ISBN: 978-3-54-023867-6, pages 115-148, DOI: 10.1007/3-540-27139-2_7 teaches a flexible, application-specific operating system for sensor networks, which form a core component of ambient intelligence systems.

US 2004/177285 A1 shows a method for synchronizing sensor data providing a teaching enabling that the data of independently operating environmental sensors can be synchronized to a common time base. This makes it possible to achieve temporal integrity of the data for the data evaluation that occurs after the measurement, in particular in a data evaluation unit.

CN 101466142 A teaches a method for synchronizing wireless sensor networks by comparing clock time, timestamp comparison, reducing the overhead of synchronous communication, the use of an estimated clock drift approximation and the cost of synchronization.

A survey of urban vehicular sensing platforms, by Uichin Lee and Mario Gerla, in Computer Networks 54 (2010), pages 527-544, published 30 July 2009, teaches that each sensor node performs event sensing, processing/ classification of sensed data, and periodically generates meta-data of extracted features and context information such as timestamps and positioning coordinates.

US 2009/0312033 A1 teaches a data Mashup service for various data types, including location dependent and mobility-aware data such as GPS location and surrounding maps. Other potential uses include business applications to track personnel, delivery vehicles and so forth.

It is commonly known in the field of programming and software design to apply techniques allowing the provisioning of a timestamp. Furthermore, rearranging software components is commonly known. So far such a rearrangement is typically performed as a programming paradigm. For instance, in higher programming languages concepts like classes, methods or components are known providing a clearly defined functionality accessible over interfaces. Such techniques are not performed at runtime but rather before compiling the respective code.

Accordingly, it is a drawback of known methods that sensor arrangement control logics and in general vehicle control instructions cannot be dynamically rearranged in a fail-safe fashion. Data items can be confused as typically the bus system in a vehicle is not arranged to transmit signals immediately and therefore the validity of data may be in question. It may be the case that later information exists rendering the previous data items unusable.

According to known methods sensor data is typically either not timestamped or control instructions are not reusable for further tasks as they are hard coded. This poses special problems in vehicles as they have a very specific infrastructure regarding data management. Furthermore, the state of the art typically does not consider new technology in vehicles such as powerful processors or communication links between vehicles and, in general, mobile devices.

Hence, it is an object of the present invention to provide a method for securing control flow of messages of sensor arrangements in such a fashion that providing control functionality in a vehicle is accomplished such that highly reliable results, for instance used by security means, are obtained. Furthermore, the organization of instructions providing functionality shall be performed requiring a minimum of hardware resources. It is furthermore on object of the present invention to provide a respectively arranged control device and a computer program implementing the suggested method.

The object is solved by a method comprising the features of the independent claim 1. Further advantages and technical effects are provided by the dependent claims.

Accordingly, a method for reliably operating a vehicle control logic is suggested comprising the steps of segmenting provided control instructions into single functional units, each functional unit being arranged to receive and process at least one sensor data item and applying functionality provided by the single functional units on the sensor data items as well as outputting an obtained result, wherein each sensor data item is assigned a timestamp.

Reliably operating a vehicle control logic is performed as the timestamps allow a correct interpretation of the received data items. Especially in a vehicle infrastructure one data item may overtake a further data item being previously sent. Accordingly, means for providing a driver assistance system need to interpret the order of received data items in the correct way.

An information item can be formed by any message, signal, bit sequence or combination thereof. A functional unit may be a component, a class, a method, a function or any collection of instructions delivering a specified information. Segmenting the control instructions into single functional units applies techniques known to the skilled person such as automated code analysis, manual analysis or automated coding algorithms.

The processors or each functional units being arranged to receive and process at least one sensor data item. Receiving these data items is performed over an interface of a network. The functional units may be connected such that the output of data providers, namely sensors, forms the input of one or several functional units. The functional units may be put into chain meaning that the output of a first functional unit provides the input of a further functional unit.

Upon applying functionality provided by the single functional units on the sensor data items and outputting an obtained result the instructions are executed transforming the sensor data into further required information. It may furthermore be the case that the instructions merely pass the sensor data on.

Each sensor data item is assigned a timestamp indicating the date it was created or received. A timestamp may be any concept indicating a logical order or an absolute value which can be interpreted such that an order of several data items can be established. It is of special advantage that the level of inaccuracy in the way the timestamp is gathered can be reflected in the trust value of the Output Datum.

According to an aspect of the present invention the obtained result is outputted to a further functional unit. This provides the advantage that the functional units can be put one after another and that a first functional unit can process the output of a previous second functional unit. Hence, a chain of functional units can be implemented.

According to a further aspect of the present invention a metric is provided indicating rules for segmenting provided control instructions into single functional units. This provides the advantage that a metric can be provided which allows the segmentation to be performed according to pretested, well-defined rules dynamically. Hence, it is possible to change the rules and provide a different metric, for instance over an interface of a computer network.

According to a further aspect of the present invention the timestamp is assigned at the time the data item is created by the sensor, read out by the functional unit or received by the functional unit. This provides the advantage that always a timestamp can be applied and that a consistent assignment is performed resulting in a correct labeling of the data items.

According to a further aspect of the present invention the timestamp comprises a link to a list of timestamps. This provides the advantage that not a complete history of timestamps needs to be transmitted but rather a reference to an existing history. Hence, message exchange is minimized.

According to a further aspect of the present invention the functional units store information indicating output computation results. This provides the advantage that also an output history is stored allowing to link to specific timestamps.

According to a further aspect of the present invention the timestamp is interpolated or extrapolated. This provides the advantage that also timestamps can be estimated using mathematical procedures or history data indicating what logical order or age is to be assigned to data items.

According to a further aspect of the present invention the timestamp comprises a value indicating logical order, a point in time, an expiry date or a time period of validity. This provides the advantage that the timestamp may comprise several parameters, which are generally not limited to this list. The parameters allow that the functional units can at any time evaluate if the data item is received in the right order, can reorder it or even discard the data item.

The object is also solved by a control device arrangement for reliably operating a vehicle control logic comprising a means being arranged to segment provided control instructions into single functional units, each functional unit being arranged to receive and process at least one sensor data item and at least one processor being arranged to apply functionality provided by the single functional units on the sensor data items and outputting an obtained result, wherein each sensor data item is assigned a timestamp.

The object is also solved by a computer program comprising instructions for implementing the method according to any of the described aspects, when executed on a computer.

It is of special advantage that the method as suggested above can be executed using structural features of the suggested device and control unit. Accordingly, the method teaches steps which are arranged to operate the suggested device. Furthermore, the device comprises structural features allowing the accomplishment of the suggested method. In addition, a computer program and a computer program product respectively is suggested comprising instructions which perform the suggested method when executed on a computer or the device according to the present invention. Furthermore, the instructions provide means for implementing the structural features of the claimed device. Accordingly, an operable image of the structural features of the device can be created. Likewise, an arrangement comprising the structural device features is provided.

The invention will now be described merely by way of illustration with reference to the accompanying drawings:
- Figure 1: shows a schematic block diagram of a Mashup network according to an aspect of the present invention;
- Figure 2: shows a schematic flow diagram demonstrating a method for reliably operating a vehicle control logic according to an aspect of the present invention; and
- Figure 3: shows a control device arrangement for reliably operating a vehicle control logic according to an aspect of the present invention.

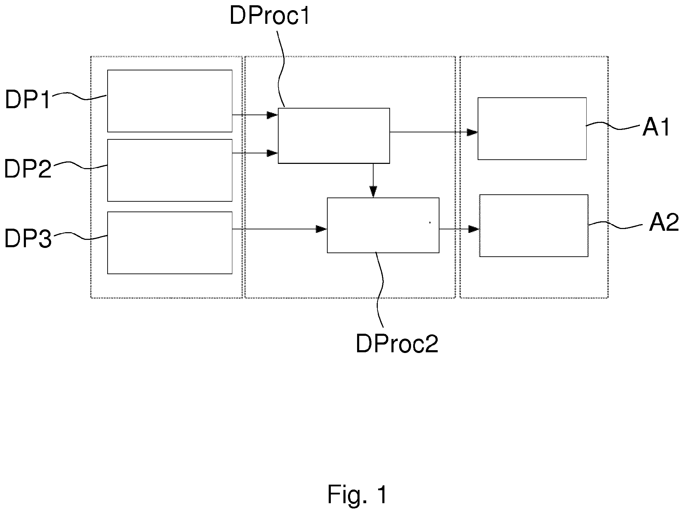

Figure 1 shows a schematic block diagram of a Mashup network which serves as an application scenario of the present invention. According to an aspect of the present invention on the left hand side sensors as data providers are depicted, in the middle the instructions are shown and on the right hand side the resulting vehicle information is demonstrated.

The sensors on the right hand side may also be referred to as data providers and are therefore assigned the reference signs DP1, DP2 and DP3. The instructions in the middle connect the data processors DP1, DP2 and DP3. Accordingly, these instructions are named data processors DProc1 and DProc2. The resulting vehicle information can be used by further applications A1 and A2

For providing a specific information such as a vehicle information a variety of sensor data is read out for retrieving the respective raw data. For doing so a so called Mashup network is suggested. Each sensor DP1, DP2 and DP3 is for instance named data provider. The general goal is to provide information such as the application or User function information. The sensors or generally data providers which can be remotely arranged and need not to be implemented in one single car, although this might be the typical case. It may be of advantage to distribute the sensors among several cars and even use sensors of further devices. Such a further device may for instance be a smart phone or in general a mobile device. The sensors DP1, DP2 and DP3 may be arranged to directly or indirectly communicate with each other. In this fashion widely spread sensors can be read out for obtaining larger amounts of raw data. According to an aspect of the present invention those data providers, which are sensors, can be read out interchangeably in case they provide the same type of data.

The architecture as being shown in figure 1 can be implemented using at least one car, wherein also further devices, such as a server, may be applied. Accordingly, abstract layers can be implemented and deployed across several hardware platforms. In general, the concepts being depicted in Figure 1 can be implemented as software and/ or hardware components likewise. The Data Processors DProc1, DProc2 can be handled in the same way according to an aspect of the present invention like sensors themselves, as the Data Processors deliver data items as well. While the sensors DP1, DP2 and DP3 measure data the Data Processors connect the gathered data and deliver composed data.

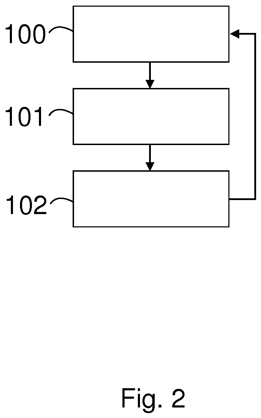

Figure 2 shows a method for reliably operating a vehicle control logic, comprising the steps of segmenting 100 provided control instructions into single functional units, each functional unit being arranged to receive and process at least one sensor data item, and applying 101 functionality provided by the single functional units on the sensor data items and outputting an obtained result, wherein each sensor data item is assigned 102 a timestamp. The suggested method steps need not necessarily be performed in the mentioned order. However, assigning a timestamp is typically accomplished as a first step.

Furthermore, the suggested method steps may be performed iteratively or in parallel. The step of segmenting 100 is a preparative step. Also further steps are typically performed for reaching the technical effect of the present invention, which are not shown.

In the following the questions how Mashup Processors communicate with each other and how they exchange data according to the present invention. This will describe further features of the invention and the necessity for applying timestamps in this very specific context.

Mashup Processors, or general data processors receive a set of inputs and send a set of outputs. Those inputs and outputs have to be data-wide compatible according to an aspect of the present invention so that they can be freely connected. This is accomplished by using a generic (base) class as storage container for all kinds of data. This is called a Datum or a data item. A Datum consists of a Datum Type, telling what type of information it carries, such as 'speed', and a Datum Value as the actual speed value in this case. A Datum may also carry a Datum Toucher information for debugging purposes. A Datum Toucher is basically a collection of Mashup Processor IDs. Each Mashup Processor that processed a Datum adds its own ID to the Datum according to an aspect of the present invention. The Datum Toucher Value can be used to trace the way a mashed up information took on its way through the Mashup network. It can thereby also be used to detect circles.

Accordingly, when a Mashup Processor has finished calculating <task>, then it would store the result in a Datum and 'publish' it. Implementation-wide, publish() is just a call to the base class according to an aspect of the present invention. Under the hood the base class would not directly publish the datum but instead enqueue it in a Datum History list and then, after the output laziness period is over, notify the connected successors in the Mashup network. The Datum History is transparently maintained by the base class, but the actual Mashup Processor implementation can specify the wanted size of the history on construction, which can also be 1. As a consequence, the client would (logically) always receive a *list of* Datums.

In contrast to traditional algorithms, methods and systems provide data via a software implemented function call or via message over any communication technology with or without any timestamp. The timestamp usually defines the timestamp which the data has been received at. Furthermore, systems provide further timestamps identifying e.g. the time for collecting and sending that data.

In case that a data processor is consuming data from different sources or data providers, the timestamp of the received data should match to each other. Otherwise, the derived result might not make sense.

For example, one can imagine a set of GPS coordinates. They may be used by a Mashup Processor to calculate the speed of the car. For the processor in charge this can be performed efficiently. In parallel they are used by another Mashup Processor to query the map for the road type. This is a database lookup and doubtlessly takes more time. The difference becomes even more extreme when querying the internet. Now imagine a third Mashup Processor that compares the calculated Speed data item and the Road Type data item and signals speed limit violations. At the time this processor receives a Road Type update it already has got newer GPS coordinates. They do not match the road type it received in any case.

The system components are designed in such a way that a data item (struct of data) contains a timestamp the data was valid or is measured.

Therefore, introducing a time stamp on each data item solves this problem. The time stamp is set at the time at which the data item is 'produced'.

A Mashup Processor has the virtual method onProcess() in which the Mashup Processor's main algorithm is implemented according to an aspect of the present invention. It may be triggered by the framework whenever a data item is received and the laziness period is over. In this method there's the possibility to get the time stamp of the 'youngest' data item. The youngest data item is the one with the newest time stamp, which is not necessarily the one that was received latest.

Having this time stamp one can get all input data item at the time required. Furthermore, Mashup Processors maintain a history of their outputs. When they send a data item update then the entire history is sent according to an aspect of the present invention, respectively a reference to it. In result you have the entire history of the received data item available. The input history may contain the data item at the wanted time stamp right away; otherwise the data item can be interpolated or extrapolated. The data item Vector class can do that automatically.

Instead of sending always the whole history, the data provider or processor could just send the newest value and an additional kind of link or pointer to the history, so that receiver is able to get directly the actual value or history which is required.

The data provider or processor could send number of historic data entries based on the last required history entries. The receiver could send an ACK with actual required number of data sets, so that the server is able to learn from it. For example, when exactly the same number of entries was required, the sender could decide to not send less data. Otherwise the sender might decide to adjust the amount of data to be sent the next time.
- according to an aspect of the present invention the amount of data items could be the minimum of entries which has been requested to ensure that never too much history data is being sent;
- according to a further aspect of the present invention the amount of data items could be also at least such an amount of history data, which can e.g. be stored definitely within one packet segment over network or Can-Bus, etc; and
- according to a further aspect of the present invention the amount of data items could also be calculated based on a certain probability based on statistical analysis.

Timestamps characterizing data sets avoids errors in the Mashup network. The suggest invention delivers an efficient possibility to communicate the timestamps in a Mashup network.

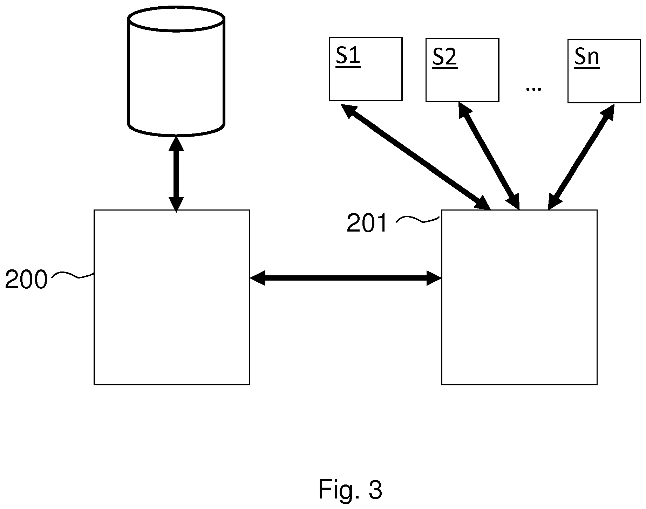

Figure 3 shows control device arrangement for reliably operating a vehicle control logic comprising a means 200 being arranged to segment provided control instructions into single functional units, each functional unit being arranged to receive and process at least one sensor data item, and at least one processor 201 being arranged to apply functionality provided by the single functional units on the sensor data items and outputting an obtained result, wherein each sensor data item is assigned a timestamp. The sensors S1, S2, ..., Sn are addressed and read out for obtaining the respective data items. A data storage may be present indicating how to segment provided control instructions.

The segmentation rules along with the respective control instructions are obtained from the database, a server or any remotely arranged storage means. Such a database can be integrated in the vehicle as well.

The assignment of timestamps can be performed by units being arranged at the sensors S1, S2, ..., Sn and/ or in the unit 201 itself. The skilled person recognizes that further structural features are required for implementing the suggested technical teaching. For instance, the connections being indicated by bidirectional arrows may be formed by a network implying further network controllers. As the devices 200 and 201 are typically arranged spaced apart from each other the assignment of timestamps makes message exchange reliable as the respective instructions are divided into sub-instructions resulting in Mashup processors. When splitting the original control instructions into smaller control instructions the semantics of the underlying interfaces and control flows may be lost, which makes it necessary to recognize the control flow of messages. According to the present invention a system wide means is created for making sure the control flow is interpreted properly.

The application domain of the present invention is the implementation and operation of sensor arrangement in vehicles. The present invention allows a control system to be operated securely and is therefore suitable for implementation of robust systems.

## Claims

1. A method for reliably operating a vehicle control logic, comprising the steps of:
- segmenting (100) provided control instructions into single functional units, each functional unit being arranged to receive and process at least one sensor data item; and
- applying (101) functionality provided by the single functional units on the sensor data items and outputting an obtained result, **characterized in that** each sensor data item is assigned (102) a timestamp and a metric is provided indicating rules for segmenting (100) provided control instructions into single functional units.

2. The method according to claim 1, **characterized in that** the obtained result is outputted to a further functional unit.

3. The method according to claim 1 or 2, **characterized in that** the timestamp is assigned at the time the data item is created by the sensor, read out by the functional unit or received by the functional unit.

4. The method according to any one of the preceding claims, **characterized in that** the timestamp comprises a link to a list of timestamps.

5. The method according to any one of the preceding claims, **characterized in that** the functional units store information indicating output computation results.

6. The method according to any one of the preceding claims, **characterized in that** the timestamp is interpolated or extrapolated.

7. The method according to any one of the preceding claims, **characterized in that** the timestamp comprises a value indicating logical order, a point in time, an expiry date or a time period of validity.

8. A control device arrangement for reliably operating a vehicle control logic comprising
- a means (200) being arranged to segment provided control instructions into single functional units, each functional unit being arranged to receive and process at least one sensor data item; and
- at least one processor (201) being arranged to apply functionality provided by the single functional units on the sensor data items and outputting an obtained result, **characterized in that** each sensor data item is assigned a timestamp and a metric is provided indicating rules for segmenting (200) provided control instructions into single functional units.

9. A computer program comprising instructions for implementing the method of any one of claims 1 -7 when executed on a computer.

## Patentansprüche

1. Verfahren zum zuverlässigen Betreiben einer Fahrzeugsteuerlogik, das die Schritte umfasst:
- Segmentieren (100) von bereitgestellten Steueranweisungen in einzelne funktionelle Einheiten, wobei jede funktionelle Einheit so ausgelegt ist, dass sie zumindest ein Sensordatenelement empfängt und verarbeitet; und
- Anwenden (101) einer von den einzelnen funktionellen Einheiten bereitgestellten Funktionalität auf die Sensordatenelemente und Ausgeben eines erhaltenen Ergebnisses, **dadurch gekennzeichnet, dass** jedem Sensordatenelement ein Zeitstempel zugeordnet (102) wird und eine Metrik bereitgestellt wird, die Regeln zum Segmentieren (100) von bereitgestellten Steueranweisungen in einzelne funktionelle Einheiten indiziert.

2. Verfahren nach Anspruch 1, **dadurch gekennzeichnet, dass** das erhaltene Ergebnis an eine weitere funktionelle Einheit ausgegeben wird.

3. Verfahren nach Anspruch 1 oder 2, **dadurch gekennzeichnet, dass** der Zeitstempel zu dem Zeitpunkt zugeordnet wird, an dem das Datenelement von dem Sensor erstellt wird, von der funktionellen Einheit gelesen wird oder von der funktionellen Einheit empfangen wird.

4. Verfahren nach einem der vorstehenden Ansprüche, **dadurch gekennzeichnet, dass** der Zeitstempel eine Verknüpfung zu einer Zeitstempelliste umfasst.

5. Verfahren nach einem der vorstehenden Ansprüche, **dadurch gekennzeichnet, dass** die funktionellen Einheiten Informationen speichern, die ausgegebene Rechenergebnisse indizieren.

6. Verfahren nach einem der vorstehenden Ansprüche, **dadurch gekennzeichnet, dass** der Zeitstempel interpoliert oder extrapoliert wird.

7. Verfahren nach einem der vorstehenden Ansprüche, **dadurch gekennzeichnet, dass** der Zeitstempel einen Wert umfasst, der eine logische Reihenfolge, einen Zeitpunkt, ein Ablaufdatum oder einen Gültigkeitszeitraum indiziert.

8. Steuervorrichtungsanordnung zum zuverlässigen Betreiben einer Fahrzeugsteuerlogik, die umfasst:
- ein Mittel (200), das so ausgelegt ist, dass es bereitgestellte Steueranweisungen in einzelne funktionelle Einheiten segmentiert, wobei jede funktionelle Einheit so ausgelegt ist, dass sie zumindest ein Sensordatenelement empfängt und verarbeitet; und
- zumindest einen Prozessor (201), der so ausgelegt ist, dass er eine von den einzelnen funktionellen Einheiten bereitgestellte Funktionalität auf die Sensordatenelemente anwendet, und der ein erhaltenes Ergebnis ausgibt, **dadurch gekennzeichnet, dass** jedem Sensordatenelement ein Zeitstempel zugeordnet wird und eine Metrik bereitgestellt wird, die Regeln zum Segmentieren (200) von bereitgestellten Steueranweisungen in einzelne funktionelle Einheiten indiziert.

9. Computerprogramm, das Anweisungen zum Umsetzen des Verfahrens nach einem der Ansprüche 1 bis 7, wenn es auf einem Computer ausgeführt wird, umfasst.

## Revendications

1. Procédé de gestion fiable d'une logique de commande de véhicule comprenant les étapes consistant à :
- segmenter (100) les instructions de commande fournies en des unités fonctionnelles simples, chaque unité fonctionnelle étant prévue pour recevoir et traiter au moins un élément de données de capteur, et
- appliquer (101) la fonctionnalité fournie par les unités fonctionnelles simples aux éléments de données de capteur et fournir en sortie le résultat obtenu,
**caractérisé en ce qu'**
à chaque élément de données de capteur on attribue (102) une estampille temporelle et une métrique est prévue indiquant les règles de segmentation (100) des instructions de commande fournies en des unités fonctionnelles simples.

2. Procédé selon la revendication 1,
**caractérisé en ce que**
le résultat obtenu est fourni en sortie à une autre unité fonctionnelle.

3. Procédé selon la revendication 1 ou 2,
**caractérisé en ce que**
l'estampille temporelle est attribuée à l'instant auquel l'élément de données est créé par le capteur, lu par l'unité fonctionnelle ou reçu par l'unité fonctionnelle.

4. Procédé selon l'une quelconque des revendications précédentes,
**caractérisé en ce que**
l'estampille temporelle comporte un lien avec une liste d'estampilles temporelles.

5. Procédé selon l'une quelconque des revendications précédentes,
**caractérisé en ce que**
les unités fonctionnelles contiennent des informations indiquant les résultats de calculs.

6. Procédé selon l'une quelconque des revendications précédentes,
**caractérisé en ce que**
l'estampille temporelle est interpolée ou extrapolée.

7. Procédé selon l'une quelconque des revendications,
**caractérisé en ce que**
l'estampille temporelle comporte une valeur indiquant l'ordre logique, un instant, une date d'expiration ou une durée de validité.

8. Ensemble de dispositif de commande pour gérer de manière fiable une logique de commande de véhicule comprenant :
- un moyen (200) pour segmenter les instructions de commande fournies en des unités fonctionnelles simples, chaque unité fonctionnelle étant organisée pour recevoir et traiter au moins un élément de données de capteur, et
- au moins un processeur (201) pour appliquer une fonctionnalité par les unités fonctionnelles simples aux éléments de données de capteur et fournir en sortie le résultat obtenu,
**caractérisé en ce qu'**
on attribue une estampille temporelle à chaque élément de données de capteur et une métrique indiquant les règles de segmentation (200) des instructions de commande fournies en des unités fonctionnelles simples.

9. Programme d'ordinateur comportant des instructions pour réaliser le procédé selon l'une quelconque des revendications 1 à 7, lorsque le programme est appliqué par un ordinateur.
